Europäisches Patentamt

(19) European Patent Office

Office européen des brevets

(11) Numéro de publication: **0 060 777**
**B1**

(12) **FASCICULE DE BREVET EUROPEEN**

(51) Int. Cl.³: **G 21 C 5/10**, G 21 C 15/02

(45) Date de publication du fascicule du brevet:
**24.10.84**

(21) Numéro de dépôt: **82400434.5**

(22) Date de dépôt: **11.03.82**

(54) Réacteur nucléaire à eau légère à cloisonnement de coeur par tiges et plaques entretoises.

(30) Priorité: **13.03.81 FR 8105036**

(43) Date de publication de la demande:
**22.09.82 Bulletin 82/38**

(45) Mention de la délivrance du brevet:
**24.10.84 Bulletin 84/43**

(84) Etats contractants désignés:
**AT BE CH DE FR GB IT LI SE**

(56) Documents cités:
**FR - A - 1 593 136**
**FR - A - 2 063 022**
**FR - A - 2 168 200**
**FR - A - 2 284 957**
**GB - A - 1 292 431**

(73) Titulaire: **FRAMATOME ET CIE., Tour Fiat 1, Place de la Coupole, F-92400 Courbevoie (FR)**

(72) Inventeur: **Verdeau, Jean-Jacques, 40 allée de la Gambauderie, F-91190 Gif-sur-Yvette (FR)**
Inventeur: **Yazidjian, Jean-Claude, 10/12 rue Yvan Tourgueneff, F-78380 Bougival (FR)**

(74) Mandataire: **Dupuy, Louis et al, CREUSOT-LOIRE 15 rue Pasquier, F-75383 Paris Cedex 8 (FR)**

## Description

La présente invention concerne la réalisation des réacteurs nucléaires à eau légère dans lesquels les éléments combustibles constituant le cœur sont refroidis par circulation de l'eau de refroidissement à travers le cœur, le long des éléments individuels disposés parallèlement les uns aux autres. Elle concerne plus particulièrement les moyens qui permettent de cloisonner le cœur et par là même d'organiser la circulation de l'eau de refroidissement ou réfrigérant, afin d'éviter l'apparition de trajets préférentiels, nuisibles à l'efficacité, alors que la section offerte à la circulation n'est en général pas uniformément occupée par les éléments combustibles.

Ainsi notamment, dans les réacteurs à refroidissement par liquide, le combustible est sous forme de crayons groupés par assemblages traversés par le réfrigérant. Le cœur est constitué de tels assemblages juxtaposés, serrés les uns contre les autres, chaque assemblage étant prismatique, généralement à section carrée. Le pourtour du cœur présente alors nécessairement des redans. L'ensemble est disposé dans une jupe-enveloppe, supportant le cœur, qui est, elle, de forme cylindrique, ou tout au moins sans angles, comme la cuve qui contient le cœur et ses équipements annexes, baignant dans le liquide de refroidissement. Entre les assemblages périphériques et la jupe-enveloppe, il subsiste donc une zone annulaire qui est vide de combustible.

Pour empêcher le réfrigérant de circuler librement dans cette zone et le canaliser sur le cœur proprement dit, il est connu d'utiliser un ensemble de cloisonnement qui épouse exactement le contour du cœur. La fixation de cet ensemble de cloisonnement pose des problèmes de réalisation pratique qui, à ce jour, n'ont jamais reçu de solution satisfaisante. Des plaques de cloisonnement peuvent être fixées à des plaques de renfort transversales, ou conformateurs, elles-mêmes fixées à l'enveloppe cylindrique du cœur. Mais il n'est pas facile de concevoir un mode de fixation qui, à la fois, se prête aux exigences de précision dimensionnelle, très sévères dans ce domaine, résiste aux contraintes mécaniques résultant des gradients de température qui apparaissent dans les cloisons et les plaques de renfort, et supporte sans dommage les flux élevés de neutrons et de rayons gamma lors du fonctionnement du réacteur. La fixation par vis est très sensible aux contraintes mécaniques et au flux neutronique, au point qu'on a pensé équiper chaque vis d'un système de refroidissement spécial. La fixation par soudure et tenons entraîne des complications de fabrication et de montage et des contraintes dues à des dilatations thermiques différentielles qui ne la rendent guère plus acceptable.

Par ailleurs, on connaît par le GB-A Nº 1292431 un réacteur nucléaire à eau légère dont le cœur est constitué d'assemblages combustibles prismatiques juxtaposés définissant un contour à redans. A l'intérieur d'une enveloppe limitant latéralement le volume traversé par l'eau de refroidissement du cœur, des plaques-entretoises sont disposées entre les assemblages périphériques et l'enveloppe. Mais ces plaques-entretoises s'opposent seulement aux courants axiaux qui contournent le cœur.

L'invention permet d'éviter ces divers inconvénients par une conception nouvelle du cloisonnement, où les plaques verticales traditionnelles sont remplacées par des tiges qui remplissent les mêmes fonctions de canalisation de la circulation du liquide de refroidissement, avec même des améliorations, sans poser les mêmes problèmes de fixation, et qui, en outre, ont comme avantage complémentaire de permettre d'adapter localement l'importance de leur intervention dans l'atténuation neutronique entre le cœur proprement dit et la cuve du réacteur, et d'assurer ainsi une protection plus efficace de la cuve contre l'irradiation.

L'invention a donc pour objet un réacteur nucléaire à eau légère constitué d'assemblages combustibles prismatiques juxtaposés à l'intérieur d'une enveloppe limitant latéralement le volume traversé par l'eau de refroidissement du cœur circulant longitudinalement dans les assemblages et comportant, entre les assemblages périphériques et l'enveloppe, des plaques-entretoises solidaires de l'enveloppe qui suivent par leur contour intérieur le contour extérieur du cœur, caractérisé par le fait qu'il comporte également entre les assemblages périphériques et l'enveloppe, parallèlement auxdits assemblages, une ou plusieurs rangées de tiges tout autour du cœur montées libres en coulissement dans des perforations des plaques-entretoises et disposées les unes à proximité des autres en suivant de près le contour à redans du cœur, pour canaliser avec lesdites plaques-entretoises la circulation du liquide de refroidissement.

Les tiges peuvent être très nombreuses et rapprochées les unes des autres, sur plusieurs rangées tout autour du cœur proprement dit, en suivant de très près le contour à redans de celui-ci. Elles limitent ainsi les courants transversaux dans la circulation du réfrigérant en périphérie du cœur, qui pourraient provoquer des vibrations ou un sous-refroidissement du combustible des assemblages périphériques. Cependant, elles permettent encore une communication suffisante avec le volume interne du cœur pour assurer un équilibre de pression et permettre, en cas d'accident de perte de réfrigérant primaire, que le réfrigérant primaire se trouvant entre l'enveloppe et le cœur s'évacue en même temps que celui qui traverse les assemblages combustibles. On s'affranchit ainsi totalement des risques de déformation qu'impliqueraient alors les plaques de cloisonnement classiques et qui pourraient entraîner des perturbations dans le refroidissement après l'accident.

D'une manière générale, les tiges du réacteur suivant l'invention apportent une solution simple au problème des contraintes mécaniques, y compris celles qui résultent de dilatations thermiques différentielles. Elles sont faciles à mettre en place par introduction à travers les plaques-entretoises, perforées à cet effet, et elles y coulissent librement dans la direction longitudinale, c'est-à-dire, en pratique, la direction verticale des assemblages combustibles, aussi bien lors de leur mise en place qu'ensuite, lors de leur dilatation ·thermique en fonctionnement. Seules les plaques-entretoises sont rigidement solidaires de l'enveloppe, à laquelle elles sont fixées par exemple par des vis ou par soudage.

Les tiges sont avantageusement de forme cylindrique, passant ainsi aisément dans des orifices circulaires correspondants des plaques-entretoises. Elles sont en général disposées suivant un pas régulier, triangulaire, carré, ou de toute autre forme, et relativement serré, avec, par exemple, un pas entre tiges adjacentes guère supérieur au diamètre des tiges. Elles peuvent être pleines ou creuses. Elles peuvent être réalisées en tout matériau adapté aux conditions d'irradiation qui existent autour du cœur, par exemple en acier inoxydable ou en un alliage de zirconium, et de préférence en un matériau ayant un coefficient de réflexion neutronique élevé. On peut par exemple constituer les tiges sous forme de tubes métalliques contenant un matériau réflecteur tel que le béryllium.

En plus de leur rôle dans la circulation du réfrigérant, ces tiges protègent la cuve du réacteur du rayonnement neutronique et du rayonnement gamma produits en fonctionnement par le combustible nucléaire. De ce point de vue, il est avantageux de varier autour du cœur le nombre de rangées, c'est-à-dire la densité numérique des tiges dans le sens radial, de manière à compenser les variations de la distance entre assemblages périphériques et la cuve pour assurer partout une atténuation suffisante du rayonnement avant qu'il n'atteigne la cuve.

Dans un mode de réalisation préféré du réacteur suivant l'invention, les plaques-entretoises maintenant latéralement les tiges sont disposées aux mêmes niveaux horizontaux que les grilles des assemblages combustibles disposées à différents niveaux sur la hauteur de ces assemblages, et elles sont conformées de manière que, tout autour du cœur, leur contour intérieur suive le contour extérieur des grilles des assemblages périphériques du cœur. Si les plaques-entretoises du réacteur selon l'invention viennent par leur contour intérieur contre les grilles des assemblages périphériques, cela permet qu'en cas de sollicitations transversales du cœur, dues par exemple à un séisme, les assemblages combustibles périphériques s'appuient par leurs grilles sur les plaques-entretoises, qui contribuent ainsi à la résistance d'ensemble du réacteur à ce genre d'incident.

Outre les orifices de passage des tiges, les plaques-entretoises comportent de préférence d'autres perforations qui permettent une certaine circulation de réfrigérant verticalement entre le cœur et son enveloppe. La perte de charge du réfrigérant qui contourne ainsi le cœur peut être réglée par le nombre, la disposition et les dimensions desdites perforations. On peut ainsi s'assurer que, pour un débit de contournement qui est en général de l'ordre du centième du débit principal qui traverse effectivement le cœur, la perte de charge subie par le réfrigérant de contournement à la traversée de chaque plaque-entretoise soit du même ordre de grandeur que la perte de charge du réfrigérant du débit principal à la traversée des grilles d'assemblages combustibles placées au même niveau. Certaines des perforations sont avantageusement des trous verticaux percés dans les plaques-entretoises se situant entre l'enveloppe du cœur et les tiges, d'autres sont des indentations sur le pourtour intérieur des plaques-entretoises.

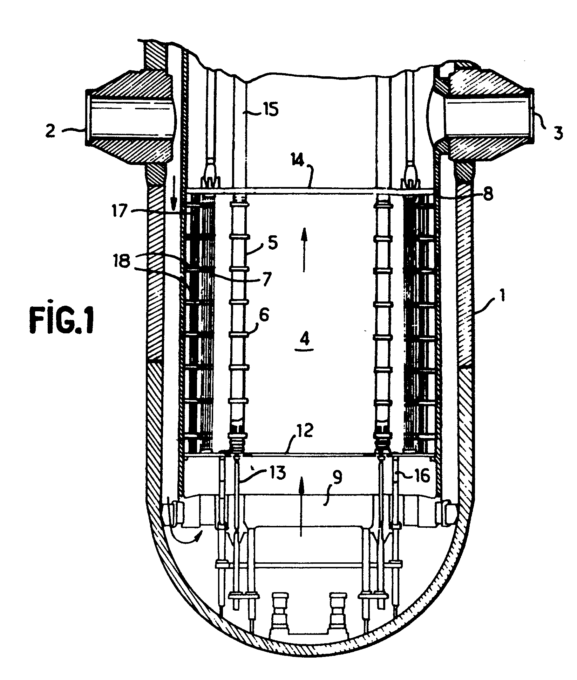

D'autres caractéristiques de l'invention ressortiront de la description qui suit, laquelle concerne un mode de réalisation particulier, nullement limitatif, d'un réacteur nucléaire à refroidissement par eau légère à cloisonnement de cœur conçu selon l'invention. La description fait référence aux fig. 1 à 5 des dessins annexés, dans lesquelles:

la fig. 1 représente une vue partielle du réacteur en coupe verticale;

la fig. 2 représente plus particulièrement, en coupe verticale, les éléments qui réalisent le cloisonnement du cœur, dans une première variante de réalisation;

la fig. 3 montre ces éléments dans une coupe horizontale au bord du cœur, avec une plaque-entretoise vue de dessus, et

les fig. 4 et 5 sont les homologues des fig. 2 et 3, mais pour une seconde variante de réalisation.

Sur la fig. 1, on a représenté schématiquement l'ensemble du réacteur, enfermé dans une cuve 1, munie de tubulures 2 et 3, respectivement pour l'entrée et la sortie du réfrigérant primaire qui assure en fonctionnement le refroidissement du cœur 4. Ce cœur est composé d'assemblages combustibles 5 verticaux, constitués chacun d'un ensemble de crayons combustibles 7, maintenus latéralement les uns par rapport aux autres par des grilles 6 à différents niveaux.

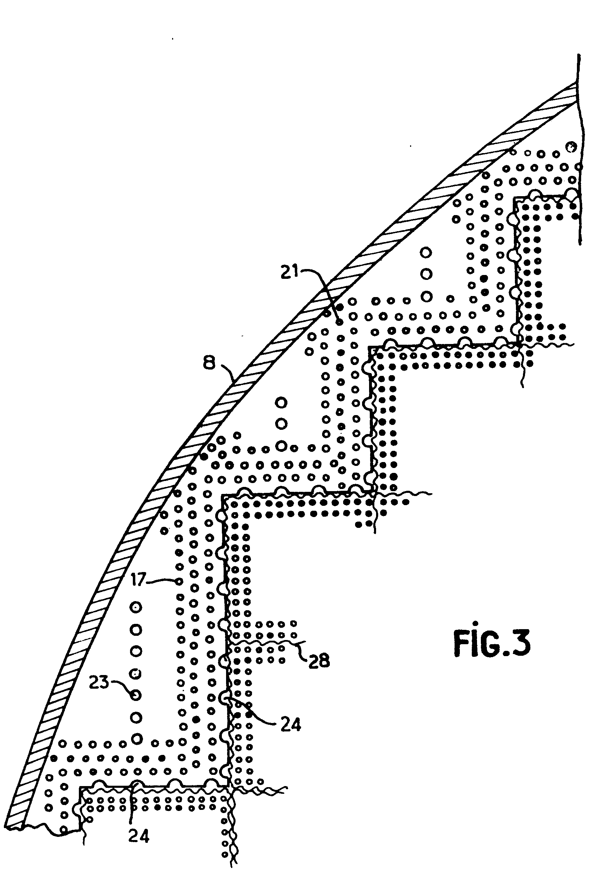

Les assemblages sont de section carrée et ils sont juxtaposés serrés les uns contre les autres, comme le montre la section de la fig. 3. L'ensemble est disposé à l'intérieur d'une jupe-enveloppe cylindrique 8 qui, avec un fond-support 9, porte tout le cœur, suspendu par elle à la bride supérieure de la cuve. Les tubulures d'entrée 2 du réfrigérant débouchent dans la cuve 1 à l'extérieur de la jupe-enveloppe 8, les tubulures de sortie 3 à l'intérieur. La circulation qui est établie en fonctionnement comporte ainsi un trajet descendant dans l'espace annulaire entre cuve 1 et jupe-enveloppe 8, suivi d'un trajet ascendant à travers le fond-support 9 et le cœur 4.

Sur la fig. 1, on a également représenté la plaque inférieure de cœur 12, les colonnes d'instrumentation du cœur 13 et les équipements internes supérieurs qui comprennent la plaque supérieure de cœur 14 et les tubes de guidage 15 des grappes de contrôle. Les assemblages combustibles 5 s'étendent de la plaque inférieure de cœur 12 à la plaque supérieure 14. La plaque inférieure, portant les assemblages, repose sur le fond-support 9 par des colonnes 16, tandis que la plaque supérieure appuie directement sur les assemblages par le poids des équipements internes supérieurs et le serrage du couvercle de cuve. L'une et l'autre sont percées de nombreux trous, pour le centrage des assemblages combustibles et pour le passage de l'eau de refroidissement. On a fait figurer en outre des tiges 17 qui s'étendent comme les assemblages combustibles verticalement entre les plaques de cœur 12 et 14 et des plaques-entretoises 18 dans lesquelles les tiges sont montées à frottement doux.

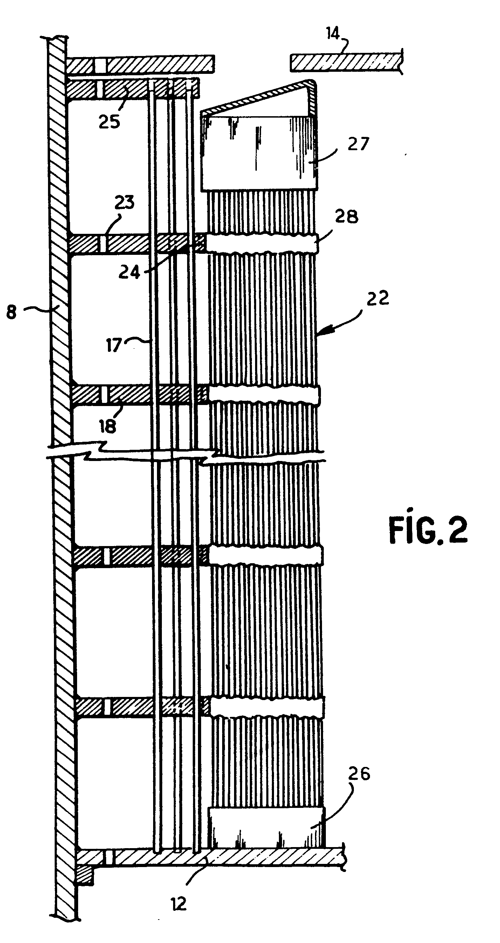

La disposition des tiges apparaît d'une manière plus précise, d'une part, sur la fig. 2 dans un plan radial vertical du réacteur, d'autre part, sur la fig. 3 pour leur répartition en section transversale (horizontale). La forme et la disposition des plaques-entretoises ressortent également de ces mêmes figures.

La fig. 3 illustre comment la forme prismatique des assemblages combustibles juxtaposés donne au cœur un contour extérieur à redans. C'est essentiellement le long de ce contour que sont réparties les tiges 17 en trois rangées et selon un pas triangulaire dans le cas particulier considéré. Face aux coins pointant vers l'extérieur, il est prévu des rangées supplémentaires de tiges 21, contre la jupe-enveloppe, renforçant la fonction de protection thermique vis-à-vis de la cuve.

Les tiges 17 sont représentées de forme cylindrique et pleines. Elles sont encastrées par leurs extrémités inférieures dans des trous borgnes prévus à cet effet dans la plaque inférieure de cœur 12. Cette dernière porte le poids des tiges comme elle porte celui des assemblages combustibles. On a représenté sur la fig. 2 un assemblage périphérique 22, reposant sur la plaque inférieure de cœur 12 par son embout inférieur 26, tandis que, par son embout supérieur 27, il est retenu par la plaque supérieure de cœur 14, qui permet cependant le passage des grappes de contrôle mobiles verticalement dans les assemblages 5. Les tiges 17 viennent par leurs extrémités supérieures buter sur cette plaque supérieure de cœur une fois celle-ci en place. Il est prévu cependant une certaine latitude pour absorber les dilatations thermiques des tiges.

Les plaques-entretoises 18 guident les tiges dans leurs déplacements verticaux. Il en est prévu plusieurs, à des niveaux différents du cœur, et il s'en trouve en particulier une à chacun des niveaux où les assemblages combustibles comportent une grille transversale. Chaque plaque-entretoise court annulairement tout autour du cœur, en plusieurs secteurs soudés entre eux. Le long de son pourtour extérieur, qui est circulaire et de rayon correspondant au diamètre interne de la jupe-enveloppe 8, elle est fixée à cette enveloppe, par soudure dans le cas représenté. Son contour extérieur présente des redans complémentaires de ceux du pourtour extérieur du cœur, qu'il suit en tous points de très près, quasiment en appui sur les grilles 28 des assemblages périphériques, situées au même niveau.

Les plaques-entretoises sont toutes identiques entre elles, ce qui facilite leur réalisation. Elles ne sont pas seulement perforées à l'endroit du passage des tiges. Elles comportent en outre des trous 23 répartis dans les espaces compris entre les tiges 17 et la jupe-enveloppe 8, ainsi que des indentations semi-circulaires 24 sur leur pourtour intérieur. Des trous analogues sont ménagés à travers respectivement la plaque inférieure 12 et la plaque supérieure 14 de cœur. En haut du cœur, une dernière plaque-entretoise 25 est disposée au niveau des embouts supérieurs des assemblages combustibles, juste sous la plaque supérieure 14, laquelle est au contraire pleine dans sa partie située au-dessus des tiges 17. La longueur totale des tiges est telle que leur extrémité supérieure se place normalement dans l'épaisseur de la dernière plaque-entretoise 25. Cela permet leur dilatation thermique avant qu'elles ne viennent buter sur la face inférieure de la plaque supérieure de cœur. Des ressorts, non représentés sur les figures, peuvent être montés en tête des tiges 17 pour éviter qu'elles ne vibrent sous l'action du réfrigérant en circulation. Dans tous les cas, la plaque supérieure retient les tiges comme les assemblages combustibles contre l'envol sous la poussée du réfrigérant.

Par le choix du pas des tiges 17 et de leur diamètre, et par celui des trous 23 et indentations 24, on détermine les conditions de circulation du réfrigérant au voisinage du cœur. L'ensemble réalise ainsi ce que l'on appelle le cloisonnement du cœur, en limitant les échanges par communication entre le cœur proprement dit et la zone annulaire de contournement entre le cœur et son enveloppe, sans toutefois les interdire complètement mais en n'autorisant qu'un faible débit de contournement, et en permettant dans cette zone autour du cœur une circulation verticale qui peut être freinée juste suffisamment pour créer sensiblement la même perte de charge à la traversée des plaques-entretoises dans la zone de contournement qu'à la traversée des grilles des assemblages combustibles.

Dans la réalisation particulière des fig. 2 et 3, le rôle dans le cloisonnement du cœur est dévolu essentiellement aux trois rangées continues de tiges, lesquelles ont un diamètre et un écartement qui peuvent être supérieurs à ceux des crayons de combustible dans les assemblages, mais qui restent du même ordre de grandeur. Les tiges supplémentaires 21 en regard des angles proéminents du cœur assurent une atténuation du rayonnement complémentaire à celle des trois rangées.

Divers avantages de cette réalisation ont déjà été signalés. Il y a lieu de rappeler à ce sujet que le montage des tiges n'implique aucune fixation, que ces tiges sont faciles à obtenir par étirage et qu'elles ne demandent aucun usinage spécial, et que les plaques-entretoises sont également faciles à réaliser par perforation de plaques identiques entre elles. Le montage des tiges permet leur libre dilatation, par rapport aux plaques-entretoises et par rapport à l'enveloppe du cœur. Au surplus, la dilatation différentielle entre les tiges et l'enveloppe reste faible, car les températures moyennes des tiges et de l'enveloppe restent voisines; les tiges sont certes soumises à un flux gamma plus élevé, mais elles sont en pratique moins épaisses que l'enveloppe, et donc mieux refroidies. Enfin, il est possible d'inspecter périodiquement l'état du cloisonnement par prélèvement de quelques tiges après démontage des structures internes supérieures et, si nécessaire, également de remplacer alors certaines tiges.

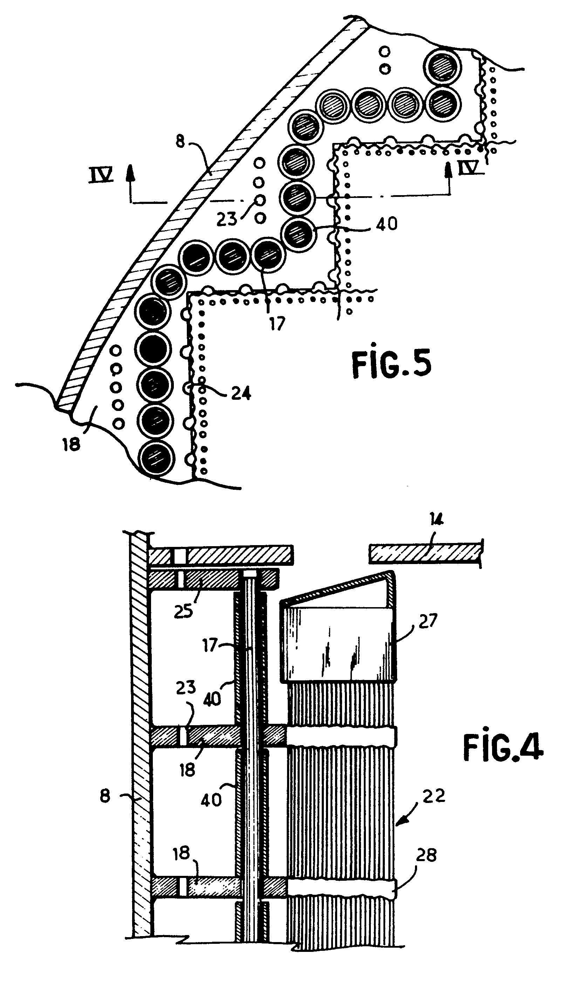

La plupart de ces avantages se retrouvent dans la variante des fig. 4 et 5, dans laquelle les tiges 17 sont insérées coaxialement dans des tubes-entretoises 40, dont chacun est intercalé verticalement entre deux plaques-entretoises 18 successives. Ces tubes permettent de réduire l'espace entre les tiges et donc de diminuer encore les échanges hydrauliques entre le cœur et la zone annulaire.

Les tubes-entretoises 40 sont constitués d'un matériau identique à celui des tiges. Ils prennent appui sur les plaques-entretoises 18 sur lesquelles ils sont montés librement. Les jeux existant entre les tubes 40 et les tiges 17, d'une part, les plaques-entretoises 18, d'autre part, permettent leur libre dilatation. Dans la réalisation représentée, les tubes sont tangents entre eux. Cette disposition autorise de ne prévoir qu'une seule rangée de tiges au lieu des trois rangées continues de la variante des fig. 2 et 3. Il n'en reste pas moins que des tiges supplémentaires peuvent être prévues en regard des angles saillants du contour du cœur.

### Revendications

1. Réacteur nucléaire à eau légère, constitué d'assemblages combustibles (5) prismatiques juxtaposés à l'intérieur d'une enveloppe (8) limitant latéralement le volume traversé par l'eau de refroidissement du cœur circulant longitudinalement dans les assemblages, et comportant, entre les assemblages périphériques (22) et l'enveloppe (8), des plaques-entretoises (18) solidaires de l'enveloppe (8) qui suivent par leur contour intérieur le contour extérieur du cœur, caractérisé par le fait qu'il comporte également entre les assemblages périphériques (22) et l'enveloppe (8), parallèlement auxdits assemblages, une ou plusieurs rangées de tiges (17) tout autour du cœur montées libres en coulissement dans des perforations des plaques-entretoises (18) et disposées les unes à proximité des autres en suivant de près le contour à redans du cœur (4) pour canaliser avec lesdites plaques-entretoises la circulation du liquide de refroidissement.

2. Réacteur selon la revendication 1, caractérisé par le fait que certaines plaques-entretoises (18) sont disposées aux mêmes niveaux que les grilles (6) qui maintiennent le combustible latéralement dans chaque assemblage.

3. Réacteur selon les revendications 1 et 2, caractérisé par le fait que les plaques-entretoises (18) comportent, en outre, d'une part, des trous (23) répartis entre les espaces compris entre les tiges (17) et la jupe-enveloppe (8) et, d'autre part, des indentations (24) sur leur contour intérieur.

4. Réacteur selon l'une des revendications 1 à 3, caractérisé par le fait que lesdites tiges (17) sont encastrées à leur extrémité inférieure dans une plaque inférieure de cœur (12) sur laquelle reposent également les assemblages combustibles (5).

5. Réacteur selon l'une des revendications 1 à 4, caractérisé en ce qu'il comporte, en outre, des tubes-entretoises (40) intercalés entre les plaques-entretoises (18) et dans lesquels les tiges (17) sont insérées coaxialement, avec un jeu permettant la libre dilatation thermique.

6. Réacteur selon la revendication 5, caractérisé en ce que lesdits tubes (40) sont tangents entre eux, au moins sur une rangée suivant le contour du cœur.

7. Réacteur selon l'une des revendications 1 à 6, caractérisé en ce qu'il comporte une plaque supérieure de cœur (14) retenant les tiges (17) et les assemblages combustibles (5) lors d'une circulation ascendante de l'eau de refroidissement.

8. Réacteur selon la revendication 7, caractérisé en ce que la longueur des tiges (17) permet leur dilatation thermique sous la plaque supérieure de cœur (14), éventuellement avec interposition d'un ressort.

### Patentansprüche

1. Leichtwasseratomreaktor bestehend aus prismatischen Brennstoffanordnungen (5), die im Inneren einer Hülle (8), die das vom Kühlwasser des Kerns durchströmte Volumen seitlich begrenzt, nebeneinander angeordnet sind, welches Wasser die Anordnungen in Längsrichtung durchläuft, welcher Reaktor zwischen den periphären (22) Anordnungen und der Hülle (8) Zwischenplatten (18) umfasst, die mit der Hülle (8) einstückig ausgebildet sind und die mit ihrem inneren Rand dem äusseren Umriss bzw. Rand des Kerns angepasst sind bzw. folgen, dadurch gekennzeichnet, dass der Reaktor zwischen den periphären (22) Anordnungen und der Hülle (8) parallel zu diesen Anordnungen eine oder mehrere Reihen von Stangen (17) rund um den Kern aufweist, die verschiebbar in Bohrungen bzw. Ausnehmungen der Zwischenplatten (18) montiert sind und eine neben der anderen angeordnet ist und nahe dem abgestuften Umriss des Kerns (4) verlaufen, um mit den Zwischenplatten die Zirkulation der Kühlflüssigkeit zu kanalisieren.

2. Reaktor nach Anspruch 1, dadurch gekennzeichnet, dass einige Zwischenplatten (18) auf gleicher Ebene wie Gitter (6) angeordnet sind, die den Brennstoff seitlich in jeder Anordnung halten.

3. Reaktor nach den beiden Ansprüchen 1 und 2, dadurch gekennzeichnet, dass die Zwischenplatten (18) einerseits Löcher (23), die auf dem Zwischenraum zwischen den Stangen (17) und der Hülle (8) verteilt sind, und andererseits Einbuchtungen (24) auf ihrem inneren Umriss, aufweisen.

4. Reaktor nach einem der Ansprüche 1 bis 3, dadurch gekennzeichnet, dass die Stangen (17) an ihrem unteren Ende in einer unteren Platte des Kernes (12) eingelassen sind, auf der auch die Brennstoffanordnungen (5) aufliegen.

5. Reaktor nach einem der Ansprüche 1 bis 4, dadurch gekennzeichnet, dass er Zwischenrohre (40) umfasst, die zwischen den Zwischenplatten (18) eingefügt sind und in denen die Stangen (17) koaxial eingefügt sind, mit einem Spiel, das eine freie thermische Ausdehnung zulässt.

6. Reaktor nach Anspruch 5, dadurch gekennzeichnet, dass die Rohre (40) einander berühren, zumindest in einer Reihe bzw. einem Bereich, der dem Umriss der Kerns folgt.

7. Reaktor nach einem der Ansprüche 1 bis 6, dadurch gekennzeichnet, dass er eine obere Kernplatte (14) aufweist, die die Stangen (17) und die Brennstoffanordnungen (5) bei einer aufsteigenden Zirkulation des Kühlwassers hält.

8. Reaktor nach Anspruch 7, dadurch gekennzeichnet, dass die Länge der Stangen (17) ihre thermische Ausdehnung unter der oberen Kernplatte (14), gegebenenfalls unter Einfügung einer Feder, zulässt.

## Claims

1. Light-water nuclear reactor, consisting of prismatic fuel assemblies (5) placed side by side inside a shell (8) bounding laterally the volume through which passes the water for cooling the core circulating lengthwise in the assemblies, and comprising, between the peripheral assemblies (22) and the shell (8), spacer plates (18) which are fixed integrally to the shell (8) and the inner outline of which follows the outer outline of the core, characterised in that it additionally comprises between the peripheral assemblies (22) and the shell (8), in parallel to the said assemblies, one or more rows of rods (17) all around the core, which are mounted free to slide in the perforations of the spacer plates (18) and are arranged near each other closely following the step-shaped outline of the core (4) in order to channel with the said spacer plates the circulation of the cooling liquid.

2. Reactor according to Claim 1, characterised in that certain spacer plates (18) are arranged at the same levels as the grids (6) which hold the fuel laterally in each assembly.

3. Reactor according to Claims 1 and 2, characterised in that the spacer plates (18) additionally comprise, on the one hand, holes (23) distributed between the spaces enclosed between the rods (17) and the shell skirt (8) and, on the other hand, indentations (24) on their inside outlines.

4. Reactor according to any one of Claims 1 to 3, characterised in that the said rods (17) are embedded at their lower end in a lower core plate (12) on which the fuel assemblies (5) also rest.

5. Reactor according to any one of Claims 1 to 4, characterised in that it additionally comprises spacer tubes (40) interposed between the spacer plates (18) and in which the rods (17) are inserted coaxially, with a clearance permitting free thermal expansion.

6. Reactor according to Claim 5, characterised in that the said tubes (40) are tangential to each other, at least over one row following the outline of the core.

7. Reactor according to any one of Claims 1 to 6, characterised in that it comprises an upper core plate (14) holding the rods (17) and the fuel assemblies (5) when the cooling water circulates upwards.

8. Reactor according to Claim 7, characterised in that the length of the rods (17) permits their thermal expansion under the upper core plate (14), with a spring being interposed if appropriate.

FIG.1

FIG. 2

FiG.3

FIG.5

FIG.4